# EUROPÄISCHE PATENTANMELDUNG

(11) **EP 2 835 360 A1**
(43) Veröffentlichungstag der Anmeldung: **11.02.2015**
(21) Anmeldenummer: 13179333.3
(22) Anmeldetag: 06.08.2013
(51) Int. Cl.: C03B 19/14, C03B 37/014

(54) **Verfahren zur Herstellung eines SiO2-Sootkörpers in Gegenwart von Kohlenstoffmonoxid**

(71) Anmelder: Heraeus Quarzglas GmbH & Co. KG, 63450 Hanau (DE)
(72) Erfinder: Trommer, Martin, 06749 Bitterfeld (DE); Vydra, Jan, 63456 Hanau (DE); Hünermann, Michael, 63755 Alzenau (DE); Fabian, Heinz, 63762 Großostheim (DE)
(74) Vertreter: Kühn, Hans-Christian

(57) **Zusammenfassung**

Die vorliegende Erfindung betrifft ein Verfahren zur Herstellung von SiO₂-Sootkörpern, bei dem das Verhältnis der Menge an Kohlenstoffmonoxid im Abgas zu der Menge der abgeschiedenen SiO2-Partikel in einem Bereich von 0,2 bis 50 legt. Vorzugsweise liegt das Verhältnis der Konzentrationen von CO zu NOx im Abgas in einem Bereich von 0,2 bs 30. Dadurch wird eine Verbesserung des Trocknungsverhaltens der SiO₂-Sootkörper erreicht. Weiterhin betrifft die Erfindung einen verglasten SiO₂-Sootkörper, der gemäß dem erfindungsgemäßen Verfahren erhältlich ist.

## Beschreibung

Die vorliegende Erfindung betrifft ein Verfahren zur Herstellung von SiO₂-Sootkörpern, bei dem eine Verbesserung des Trocknungsverhaltens der SiO₂-Sootkörper durch die Einstellung eines bestimmten Verhältnisses der Menge an Kohlenstoffmonoxid im Abgas zu der Menge der abgeschiedenen SiO₂-Partikel und eines bestimmten Verhältnisses der Konzentrationen von NO₂ zu CO im Abgas erreicht wird. Weiterhin betrifft die Erfindung einen verglasten SiO₂-Sootkörper, der gemäß dem erfindungsgemäßen Verfahren erhältlich ist.

### Technisches Umfeld

Eines der Hauptanwendungsgebiete von Quarzglas ist dessen Einsatz in der optischen Nachrichtentechnik, beispielsweise als Lichtwellenleiter. Dabei handelt es sich meist um Kabel, die aus einem Verbund an Glasfasern bestehen. Die Herstellung der Glasfasern erfolgt in zwei Schritten. In einem ersten Schritt wird eine sogenannte Vorform (engl. Preform) mittels chemischer Gasphasenabscheidung (chemical vapor disposition: CVD) erzeugt. Dabei wird durch eine chemische Reaktion in einer Flamme, die mit Hilfe eines oder mehrerer Brenner erzeugt wird, SiO₂ gebildet, welches sich als poröses, weißes Material auf einem Träger niederschlägt. Sobald die gewünschte Menge an SiO₂, das auch als Glasruß bezeichnet wird, aufgewachsen ist, wird die Flamme entfernt und der so erhaltene poröse SiO₂-Rohling, nachfolgend als SiO₂-Sootkörper bezeichnet, abgekühlt. Dieser SiO₂-Sootkörper wird dann in weiteren Verfahrensschritten getrocknet, verglast und in die letztendlich gewünschte Form, wie zum Beispiel eine Faser, gebracht.

Für die Herstellung der Vorform sind verschiedene Ausführungsformen des CVD-Verfahrens bekannt, von denen das OVD-Verfahren (outside chemical vapor disposition) und das VAD-Verfahren (vapour axial deposition) die wirtschaftlich bedeutendsten sind.

Beim OVD-Verfahren erfolgt das Abscheiden der SiO₂-Parikel auf der Außenseite eines massiven Rundstabs aus Aluminiumoxid oder Graphit. Eine gleichmäßige Schichtbildung wird durch entsprechende Rotation und Vortrieb des Stabes erreicht. Der Stab wird nach Ende des Abscheidungsprozesses entfernt, so dass ein SiO₂-Sootkörper in Form eines Rohres entsteht.

Beim AVD-Verfahren werden die SiO₂-Partikel auf der Stirnseite eines massiven rotierenden Stabes abgeschieden, wobei eine gleichmäßige Abscheidung durch variable geometrische Anordnung der Gasbrenner und -düsen erreicht wird.

In beiden Verfahren wird der Prozess beendet sobald die gewünschte Menge an SiO₂-Partikeln abgeschieden ist. Dabei unterscheidet man je nach Herstellungsverfahren zwischen Wandstärke des SiO₂-Sootkörpers (OVD-Verfahren) und Durchmesser des SiO₂-Sootkörpers (VAD-Verfahren), die durch die abgeschiedene Menge an SiO₂-Partikeln bedingt sind. Im Rahmen der vorliegenden Erfindung werden die beiden Begriffe als gleichbedeutend behandelt. Wandstärke im Sinne der Erfindung meint sowohl Wandstärke des mittels OVD-Verfahrens gewonnenen SiO₂-Sootkörpers in Form eines Rohres als auch Durchmesser des mittels VAD-Verfahrens hergestellten SiO₂-Sootkörpers in Form eines Stabes und unterscheidet nicht zwischen den jeweiligen Herstellungsverfahren.

Während des Abkühlens kann der SiO₂-Sootkörper je nach Verfahren vom Träger getrennt werden. Zurück bleibt ein SiO₂-Sootkörper, der im weiteren Verlauf des Verfahrens getrocknet, verglast und in die gewünschte Form gebracht wird. Dabei stellt der Trocknungsprozess aufgrund seiner vielstündigen Dauer und des großen Bedarfs an aggressiven Trocknungsgasen, die ständig frisch und mit hoher Reinheit zur Verfügung gestellt werden müssen, einen sehr zeit- und kostenintensiven Verfahrensschritt dar. Daneben verursacht die fachrechte Entsorgung der anfallenden großen Abgasmengen zusätzliche Kosten. Dieses Problem wird vor allem bei hohen Chargengewichten und dicken Wandstärken der SiO₂-Sootkörper verstärkt, bei denen eine verlängerte Trocknungszeit von Nöten ist. Es besteht jedoch der Bedarf nach einer Erhöhung der Chargengewichte, da sich dadurch die Herstellungskosten reduzieren ließen und gleichzeitig der Produktumsatz gesteigert werden könnte. Diesem Wunsch stehen die verlängerte Trocknungszeit und die damit verbundenen höheren Kosten gegenüber.

### Stand der Technik

US 4,402,720 beschreibt ein Verfahren zur Herstellung von stickstoffdotiertem Quarzglas für Lichtwellenleiter, das das Einsprühen einer gasförmigen Siliziumverbindung, Ammoniak oder einer anderen stickstoffhaltigen Verbindung und einem sauerstoffhaltigen Gas in die Brennerflamme beinhaltet, um SiOₓN_{y}-Partikel herzustellen, die auf einem Träger abgeschieden werden.

US 7,089,766 beschreibt ein Verfahren zur Herstellung von wasserfreien Sootkörpern durch die Vermeidung von Reaktionen, bei denen Wasser als Endprodukt entsteht, zum Beispiel in dem ein wasserstofffreies Brenngas wie Kohlenstoffmonoxid verwendet wird. Dem Kohlenstoffmonoxid kann zur besseren Verbrennung NO als Katalysator beigemischt werden.

DE 102 52 270 beschreibt ein Verfahren zur Herstellung eines Quarzglasrohlings, bei dem eine nur sehr geringe Belastung durch Stickoxide (NOₓ) im Abgas des Abscheidebrenners entsteht. Dies wird dadurch erreicht, dass die Brennerflamme von einem Schutzgasstrom, beispielsweise einem Gemisch aus Edelgasen, umhüllt wird.

EP 1337 483 beschreibt ein Verfahren zur Dehydrierung von SiO₂-Sootkörpern. Dabei erfolgt das Trocknen in einer halogenhaltigen Atmosphäre. Zusätzlich kann dem Halogen ein Reduktionsmittel, wie beispielsweise ein Metall, Wasserstoff oder Kohlenmonoxid, zugemischt werden.

Bei der Herstellung von Vorformen mittels CVD-Verfahen ist das Trocknen der SiO₂-Sootkörper ein vergleichsweise zeit- und kostenintensivster Schritt des Verfahrens. Eine mangelnde Trocknung des SiO₂-Sootkörpers wirkt sich negativ auf die späteren Eigenschaften des Quarzglases aus, da schon kleinste Verunreinigungen des Quarzglases zu Absorptionsverlusten führen. Es besteht daher der Bedarf, das Trocknen der SiO₂-Sootkörper zu optimieren. Weiterhin ist es für einige Anwendungen wünschenswert, SiO₂-Sootkörper mit einer dickeren Wandstärke beziehungsweise einem größeren Durchmesser, beispielsweise über 140 mm, herzustellen, die sich trotzdem ökonomisch trocknen lassen, ohne eine erhöhte Anzahl an Defekten im Quarzglas zu erzeugen.

Es ist daher die Aufgabe der vorliegenden Erfindung, das Trocknungsverhalten von mittels CVD-Verfahren hergestellten SiO₂-Sootkörpern zu verbessern und so den Herstellungsprozess zu optimieren.

Die Aufgabe wird erfindungsgemäß durch das Bereitstellen eines Verfahrens gelöst, das das Trocknen von SiO₂-Sootkörpern, vor allem von solchen mit einer Wandstärke beziehungsweise Durchmesser von über 140 mm, in einer kürzeren Zeit als im Stand der Technik üblich erlaubt.

Es wurde überraschend gefunden, dass sich eine Optimierung des Trocknungsverhaltens eines SiO₂-Sootkörpers dann erzielen lässt, wenn der Gehalt an Kohlenstoffmonoxid (CO) im Abgas und die Aufbaurate an abgeschiedenem SiO₂-Sootmaterial in einem bestimmten Mengenverhältnis zueinander stehen. Weiterhin wurde überraschend gefunden, dass ein bestimmtes Verhältnis der Konzentrationen von NO₂ und CO sich ebenfalls positiv auf das Trocknungsverhalten der SiO₂-Sootkörper auswirkt.

Gegenstand der vorliegenden Erfindung ist daher ein Verfahren zur Herstellung eines SiO₂-Sootkörpers in Gegenwart von Kohlenstoffmonoxid, welches die folgenden Schritte umfasst:
a) Bereitstellen einer Reaktionskammer, die einen oder mehrere Abscheidebrenner und wenigsten einen Abgasauslass umfasst,
b) Zuführen eines Brenngases und einer gasförmigen, Silizium enthaltenden Ausgangsverbindung in die Reaktionskammer,
c) Umsetzen des Brenngases und der gasförmigen, Silizium enthaltenden Ausgangsverbindung mittels Abscheidebrenner zu SiO₂-Partikeln,
d) Abscheiden der SiO₂-Partikel auf einem Träger unter Bildung eines SiO₂-Sootkörpers
   und
e) Trocknen des SiO₂-Sootkörpers,
wobei das Verhältnis aus Kohlenstoffmonoxid (in g/h) im Abgas und der Aufbaurate an abgeschiedenen SiO₂-Partikeln (in kg/h) im Durchschnitt in einem Bereich von 0,2 bis 50, vorzugsweise in einem Bereich von 0,4 bis 25, insbesondere in einem Bereich von 0,5 bis 15, liegt.

Unter SiO₂-Sootkörper im Sinne der vorliegenden Erfindung ist ein poröser, unverglaster SiO₂-Körper zu verstehen, der in weiteren Verfahrensschritten zu einem SiO₂-Rohling verglast wird. Der SiO₂-Sootkörper kann eine beliebige geometrische Form aufweisen, unabhängig von seiner Funktion.

Unter Abgas im Rahmen der vorliegenden Erfindung sind alle gasförmigen, nicht mehr nutzbaren Abfallprodukte zu verstehen, deren Art und Konzentration nach Austritt aus der Reaktionskammer bestimmt werden.

Für die spätere Verwendung von SiO₂-Sootkörpern ist es wünschenswert, eine möglichst gleichmäßige Abscheidung der SiO₂-Partikel auf dem Träger zu erzielen. Auf diese Weise lassen sich Aussendurchmesservariationen minimieren. Daher ist eine Ausführungsform des erfindungsgemäßen Verfahrens bevorzugt, bei der das Abscheiden der SiO₂-Partikel axial oder radial auf dem Träger erfolgt. In einer besonders bevorzugten Ausführungsform rotiert der Träger während des Abscheideprozesses.

In einer bevorzugten Ausführungsform ist der Träger ein Rundstab, beispielsweise aus Aluminiumoxid oder Graphit. Dieser kann beispielsweise während des Abscheideprozesses kontinuierlich an der Brennerflamme vorbei oder durch diese hindurch geführt werden, um eine gleichmäßige Schichtbildung der SiO₂-Partikel zu gewährleisten. Weiterhin kann der Träger während des Vortriebs gedreht werden, was zu einer homogenen Verteilung der SiO₂-Partikel und zu der Bildung eines gleichmäßigen SiO₂-Sootkörpers führt.

In einer bevorzugten Ausführungsform des Verfahrens können die Abscheidebrenner und/oder ihre Düsen eine variable geometrische Form annehmen. Die Anordnung entlang des Trägers erfolgt dabei vorzugsweise so, dass sich das gewünschte Brechungsindexprofil des SiO₂-Sootkörpers einstellen lässt.

Die SiO₂-Partikel, die sich auf dem Träger abscheiden, werden durch Umsetzung des Brenngases mit einer gasförmigen, Silizium enthaltenden Ausgangsverbindung erzeugt. Vorzugsweise erfolgt die Umsetzung in situ während des Prozesses.

Schon kleinste Verunreinigungen des Quarzglases, insbesondere OH-Gruppen, führen zu starken Absorptionsverlusten beziehungsweise Dämpfungseffekten. Um die hohe Qualität des Quarzglases zu erreichen, die für eine Verwendung in beispielsweise der optischen Nachrichtenübermittlung Voraussetzung ist, ist daher ein hoher Reinheitsgrad des SiO₂-Sootkörpers als Vorform wünschenswert. Um diesen hohen Reinheitsgrad zu erreichen, ist es wiederum vorteilhaft, dass eine vollständige Umsetzung der gasförmigen, Silizium enthaltenden Ausgangsverbindung und dem Brenngas erfolgt, um die Bildung von störenden Nebenprodukten zu verringern. Dies ist vor allem bei hohen Temperaturen der Fall. Es hat sich gezeigt, dass ein besonders hoher Reinheitsgrad der SiO₂-Partikel erzielt werden kann, wenn diese als sogenannte pyrogene Oxide in einer Knallgasflamme generiert werden.

Daher ist eine Ausführungsform bevorzugt, bei der die Umsetzung des Brenngases und der gasförmigen, Silizium enthaltende Ausgangsverbindung zu SiO₂-Partikeln mittels Flammenhydrolyse und/oder durch Verbrennung der Silizium enthaltenden Ausgangsverbindung zu SiO₂-Partikeln erfolgt.

Das ökonomische und effiziente Trocknen des SiO₂-Sootkörpers stellt eine der größten Herausforderungen in der Herstellung von Quarzglasrohlingen, unabhängig von ihrer Verwendung, dar. Unter Trocknen im Sinne der vorliegenden Erfindung ist vor allem die Reduzierung des OH-Gehaltes im SiO₂-Sootkörper zu verstehen. Bei der Umsetzung des Brenngases und der gasförmigen, Silizium enthaltenden Ausgangsverbindung entsteht neben SiO₂ auch eine große Menge Wasserdampf, der in Form von OH-Gruppen in den SiO₂-Sootkörper eingebaut wird. Das so produzierte Material ist wegen seines hohen OH-Gehalts für die Herstellung von beispielsweise Lichtwellenleitern noch ungeeignet und muss in weiteren Verfahrensschritten getrocknet werden. Dabei kann die Trocknung sowohl physikalisch als auch chemisch erfolgen.

Bevorzugt erfolgt die Trocknung durch eine Kombination aus physikalischer und chemischer Trocknung.

Es wurde gefunden, dass sich der OH-Gehalt im SiO₂-Sootkörper besonders gut reduzieren lässt, wenn der SiO₂-Sootkörper in Gegenwart einer gasförmigen chlorhaltigen Verbindung getrocknet wird.

Daher ist eine Ausführungsform des erfindungsgemäßen Verfahrens bevorzugt, in der das Trocknen des SiO₂-Sootkörpers in einer chlorhaltigen Atmosphäre erfolgt. Dazu wird der SiO₂-Sootkörper, nachdem der Abscheidungsprozess der SiO₂-Partikel beendet ist, in einen Ofen eingebracht, der von einem chlorhaltigen Trocknungsgas durchströmt wird. Dabei kann das Trocknungsgas ein einzelnes Gas oder ein Gasgemisch sein, das das chlorhaltige Gas oder die chlorhaltigen Gase umfasst. Geeignete chlorhaltige Gase sind beispielsweise Chlorgas oder gasförmiges Thionylchlorid. In einer bevorzugten Ausführungsform ist dem chlorhaltigen Gas mindestens ein weiteres Gas ausgewählt aus der Gruppe bestehend aus Helium, Argon, Stickstoff und Sauerstoff beigemischt. Vorzugsweise herrscht in dem Ofen, in dem die Trocknung erfolgt ein Überdruck im Vergleich zum Umgebungsdruck (Normaldruck etwa 1 bar).

Das chlorhaltige Trocknungsgas diffundiert in den SiO₂-Sootkörper und substituiert die OH-Gruppen unter Freisetzung von HCl. Dadurch wird der OH-Gehalt weiter abgesenkt.

Vorzugsweise erfolgt das Trocknen in einer chlorhaltigen Atmosphäre bei Temperaturen in einem Bereich von 600 °C bis 1100 °C, vorzugsweise von 700 °C bis 1000 °C. Vorzugsweise ist die Temperatur so gewählt, dass es nicht zu einer Verglasung des SiO₂-Sootkörpers kommt.

In einer bevorzugten Ausführungsform kann die Trocknung des SiO₂-Sootkörpers zusätzlich auf physikalischem Wege erfolgen, beispielsweise in einem Ofen bei Temperaturen über 750 °C. Vorzugsweise liegen die Temperaturen in einem Bereich von 750 °C bis 1300 °C. Der SiO₂-Sootkörper kann während des physikalischen Trocknungsschrittes von einem trockenem Reinstgas oder einem Gemisch aus trockenen Reinstgasen umspült werden, um den OH-Gehalt zu senken. Geeignete Reinstgase sind beispielsweise Stickstoff, Sauerstoff oder Helium.

In einer bevorzugten Ausführungsform erfolgt die physikalische Trocknung zusätzlich zu der chemischen Trocknung. Vorzugsweise erfolgt die physikalische Trocknung in einem separaten Verfahrensschritt vor der chemischen Trocknung.

Es wurde überraschend gefunden, dass sich durch die Einstellung eines bestimmten Verhältnisses des CO-Gehalts (in g/h) im Abgas und der Aufbaurate an abgeschiedenen SiO₂-Partikeln (in kg/h) das Trocknungsverhalten des SiO₂-Sootkörpers verbessern lässt. Dieses Verhältnis lässt sich durch die Wahl eines geeigneten Brenngases beeinflussen. Unter Brenngas im Sinne der vorliegenden Erfindung ist ein brennbares Gas oder ein brennbares Gasgemisch zu verstehen, das als Brennstoff für die Brenner verwendet wird.

Es hat sich gezeigt, dass sich das vorteilhafte Mengenverhältnis von CO-Gehalt im Abgas zur Aufbaurate an abgeschiedenen SiO₂-Partikeln dadurch erreichen lässt, dass die in der Brennerflamme vorhandenen gas- oder dampfförmigen kohlenstoffhaltigen Verbindungen unterstöchiometrisch verbrannt werden. Unterstöchiometrisch in diesem Sinne bedeutet, dass die Molmenge der oxidierbaren Substanzen höher ist als die des Sauerstoffs. Bevorzugt beträgt die Menge des Sauerstoffs bis 10% weniger als die für eine vollständige Menge benötigte Menge. Wie dem Fachmann geläufig ist, können alternativ die Brennereinstellungen so gewählt werden, dass ein Teil der kohlenstoffhaltigen Verbindungen unvollständig oxidiert werden, beispielsweise in dem der Abstand zwischen Brenner und Abscheidefläche verringert wird. Weiterhin kann das erfindungsgemäße Mengenverhältnis durch die Zugabe einer kohlenstoffhaltigen Verbindung zum Brenngas eingestellt werden.

Es wurde überraschend gefunden, dass sich das erfindungsgemäße Mengenverhältnis von CO-Gehalt im Abgas zur Aufbaurate der abgeschiedenen SiO₂-Partikel dadurch erreichen lässt, indem die kohlenstoffhaltigen Komponenten des Brenngases nur teilweise oxidiert werden. Dabei hat sich die Verwendung kurzkettiger Kohlenwasserstoffe als Brenngas als besonders vorteilhaft herausgestellt.

Daher ist eine Ausführungsform des erfindungsgemäßen Verfahrens bevorzugt, in der das Brenngas Kohlenwasserstoffe, insbesondere solche ausgewählt aus der Gruppe bestehend aus Methan, Ethan, Propan und Butan, umfasst.

Wie dem Fachmann bekannt ist, erhöht sich aufgrund der reduzierenden Wirkung von Kohlenstoffmonoxid (CO) die Bildung von Defekten, insbesondere Sauerstoffmangelzentren, in der SiO₂-Matrix. Weiterhin ist dem Fachmann bekannt, dass im Sinne einer optimalen Umsetzung der Silizium enthaltenden Ausgangsverbindung ein Prozess anzustreben ist, bei dem der CO-Gehalt im Abgas nicht mehr nachzuweisen ist. Es wurde allerdings überraschend gefunden, dass sich das Trocknungsverhalten des SiO₂-Sootkörpers verbessert, wenn das Abgas des Prozesses einen bestimmten Gehalt an Kohlenstoffmonoxid aufweist.

Daher ist eine Ausführungsform bevorzugt, in der dem Brenngas Kohlenstoffmonoxid zugeführt wird.

Weiterhin ist eine Ausführungsform bevorzugt, in der die Kohlenstoffmonoxidkonzentration im Abgas zwischen 1 und 300 mg/m³ liegt.

Weiterhin wurde gefunden, dass sich die geeignete Wahl der gasförmigen, Silizium enthaltenden Ausgangsverbindung ebenfalls positiv auf das Trocknungsverhalten des SiO₂-Sootkörpers auswirkt. In einer bevorzugten Ausführungsform erfolgt die Einstellung des vorteilhaften Mengenverhältnisses von CO-Gehalt im Abgas und Aufbaurate der abgeschiedenen SiO₂-Partikel durch Verwendung von Siliziumtetrachlorid als Silizium enthaltende Ausgangsverbindung in Kombination mit einem kohlenstoffhaltigen Brenngas.

Es wurde gefunden, dass sich die besten Ergebnisse dann erzielen lassen, wenn Silizium und Kohlenstoff in einer Verbindung zusammen vorliegen. In einer besonders bevorzugten Ausführungsform erfolgt die Einstellung daher durch die Verwendung einer Ausgangsverbindung, die sowohl Kohlenstoff als auch Silizium umfasst. Als besonders geeignet erwiesen sich Verbindungen, in denen der Kohlenstoff und das Silizium in gebundener Form miteinander vorliegen.

In einer bevorzugten Ausführungsform des erfindungsgemäßen Verfahrens ist die Silizium enthaltende Ausgangsverbindung daher ausgewählt aus der Gruppe bestehend aus Trimethoxymethylsilan, Octamethylcyclotetrasiloxan, Hexamethyldisiloxan, Hexamethylcyclotrisiloxan und Decamethylcyclopentasiloxan.

Um eine effiziente Energieausnutzung während des Prozesses zu gewährleisten, hat es sich als vorteilhaft erwiesen, die Energie, die bei der Umwandlung der Silizium enthaltenden Komponente frei wird, ebenfalls für den Abscheideprozess zu nutzen.

Daher ist eine Ausführungsform bevorzugt, in der der Anteil der über den/die Abscheidebrenner zugeführten Verbrennungsenergie im Abscheideprozess, der von der Silizium enthaltenden Ausgangsverbindung eingetragen wird, mindestens 40%, vorzugsweise mindestens 55% und besonders bevorzugt mindestens 75% beträgt.

Wie dem Fachmann bekannt ist, führt die reduzierende Wirkung von CO zu einem vermehrten Einbau von Defekten in die SiO₂-Matrix. Es wurde jedoch überraschend gefunden, dass diese zusätzlichen Defekte kompensiert werden können, wenn zusätzlich zu der kohlenstoffhaltigen Verbindung auch eine stickstoffhaltige Verbindung verwendet wird. Eine besonders positive Beeinflussung wurde dann erzielt, wenn die Konzentration von CO und der stickstoffhaltigen Verbindung in einem bestimmten Verhältnis im Abgas vorlagen. Es wurde gefunden, dass sich das bevorzugte Verhältnis vorzugsweise über die Zugabe eines stickstoffhaltigen Gases zum Brenngas einstellen lässt. Die bloße Anwesenheit von stickstoffhaltigen Verbindungen im Abgas, wie sie beispielsweise durch die Verbrennung von Luftstickstoff entsteht, führte zu keiner Verbesserung des Trocknungsverhaltens des SiO₂-Sootkörpers.

Daher ist eine Ausführungsform bevorzugt, in der das Brenngas zusätzlich ein stickstoffhaltiges Gas umfasst. Vorzugsweise ist das stickstoffhaltige Gas ausgewählt aus der Gruppe bestehend aus Stickstoff (N₂) und Ammoniak (NH₃) oder auch Stickoxide (NOₓ).

Die vorgenannten stickstoffhaltigen Gase können in einer alternativen Ausführungsform auch separat, also getrennt vom Brenngas, zugeführt werden, insbesondere der Flamme zugeführt werden.

Vorzugsweise handelt es sich bei den stickstoffhaltigen Verbindungen im Abgas um Stickoxide (NOₓ). Unter Stickoxide im Sinne der vorliegenden Erfindung sind stöchiometrische und nichtstöchiometrische Stickstoff-Sauerstoff-Verbindungen zu verstehen, insbesondere eine Mischung aus Stickstoffmonoxid (NO) und Stickstoffdioxid (NO₂).

Es wurde überraschend gefunden, dass sich eine Verbesserung des Trocknungsverhaltens des SiO₂-Sootkörpers erzielen lässt, wenn die Konzentration an NO₂ (in mg/m³) im Abgas das 20fache der CO-Konzentration (in mg/m³) im Abgas nicht überschreitet.

Daher ist eine Ausführungsform bevorzugt, in der das Verhältnis der Konzentrationen von NO₂ (in mg/m³) und CO (in mg/m³) im Abgas in einem Bereich von 0,2 bis 30, vorzugsweise in einem Bereich von 2 bis 20, liegt. Bei einem Verhältnis unter 0,2 konnte keine Veränderung des Trocknungsverhaltens des SiO₂-Sootkörpers festgestellt werden.

Um eine effektive Trocknung des SiO₂-Sootkörpers, vor allem von SiO₂-Sootkörpern mit einer Wandstärke von über 140 mm, zu erreichen, ist es wünschenswert, dass der SiO₂-Körper vom Trocknungsgas durchspült werden kann. Daher sollte die Dichte des SiO₂-Sootkörpers so gewählt sein, dass ein optimaler Gasaustausch gewährleistet ist.

Daher ist eine Ausführungsform bevorzugt, in der der SiO₂-Sootkörper vor dem Trocknen eine relative Dichte von 22 bis 32% aufweist, bezogen auf die Dichte von Quarzglas. Die Dichte kann beispielsweise mittels Computertomographie bestimmt werden.

Weiterhin ist eine Ausführungsform bevorzugt, in der der SiO₂-Sootkörper nach dem Trocknen eine mittlere spezifische Oberfläche von 5 bis 20 m²/g aufweist, bestimmt gemäß DIN ISO 9277:2003-5.

Das erfindungsgemäße Verfahren ist besonders für einen hohen Chargendurchlauf geeignet. Daher ist eine Ausführungsform bevorzugt, in der die Aufbaurate im Bereich von 10 bis 25 kg/h, bevorzugt 12 bis 20 kg/h, insbesondere 13 bis 17 kg/h, liegt.

Weiterhin bevorzugt ist eine Ausführungsform, bei der der SiO₂-Sootkörper eine Wandstärke von 140 bis 250 mm, vorzugsweise von 160 bis 230 mm, insbesondere von 170 bis 220 mm, aufweist, wobei die mittlere Dichte des SiO₂-Sootkörpers zwischen 26 und 30%, bezogen auf die theoretische Dichte von Quarzglas, liegt.

Wie dem Fachmann bekannt, ist der SiO₂-Sootkörper eine Vorform des Quarzglases, das zur Herstellung von beispielsweise Lichtwellenleitern verwendet wird. Um für den Einsatz in der optischen Nachrichtenübermittlung geeignet zu sein und um den endgültigen Brechungsindexverlauf des Quarzglases einzustellen, muss der SiO₂-Sootkörper in Quarzglas überführt werden. Dies geschieht durch Versintern des SiO₂-Sootkörpers, so dass es zu einer Verglasung kommt.

Daher ist eine Ausführungsform bevorzugt, in der der SiO₂-Sootkörper in einen auf den Trocknungsschritt e) folgenden Schritt verglast wird.

In einer bevorzugten Ausführungsform erfolgt das Verglasen bei Temperaturen in einem Bereich von 1300 bis 1700 °C, vorzugsweise von 1400 °C bis 1600 °C.

Quarzglas, das aus SiO₂-Sootkörpern gewonnen wird, findet aufgrund seiner optischen und thermischen Eigenschaften eine breite Anwendung, beispielsweise in der Optik, in der Fertigung von Halbleitern, als Halbleiterbauelemente oder in der Analytik, zum Beispiel als Küvettenmaterial. Dabei ist eine hohe Reinheit des Quarzglases wichtig, da vor allem OH-Gruppen, die sich im Quarzglas befinden, zu Absorptionsverlusten führen. Aufgrund der breiten Anwendungsmöglichkeiten besteht ein hoher Bedarf an Quarzglas, vor allem hochreinem Quarzglas.

Daher ist ein weiterer Gegenstand der vorliegenden Erfindung ein SiO₂-Sootkörper, der gemäß dem erfindungsgemäßen Verfahren erhältlich ist.

Ein weiterer Gegenstand der vorliegenden Erfindung ist ein verglaster SiO₂-Sootkörper, der gemäß dem erfindungsgemäßen Verfahren erhältlich ist.

Eines der wichtigsten Anwendungsgebiete für Quarzglas ist die optische Nachrichtenübermittlung, in der das Quarzglas in Form von sogenannten Glasfaserkabeln eingesetzt wird.

Daher ist ein weiterer Gegenstand der vorliegenden Erfindung die Verwendung eines erfindungsgemäßen verglasten SiO₂-Sootkörper zur Herstellung von optischen Bauteilen, insbesondere für die Fiberoptik.

Die vorliegende Erfindung soll anhand von Beispielen näher erläutert werden, wobei diese keineswegs als Einschränkung des Erfindungsgedanken zu verstehen sind.

### Beispiel:

Es wurden verschiedene SiO₂-Sootkörper mit Hilfe des OVD-Verfahrens bei verschiedenen Mengenverhältnissen von CO im Abgas zur Abscheiderate der SiO₂-Partikel und verschiedenen Konzentrationsverhältnissen von NO₂ und CO im Abgas der Prozesse hergestellt, wobei die Abscheidung der SiO₂-Partikel auf einem Träger aus Al₂O₃ erfolgte. Die Werte sind in der folgenden Tabelle 1 wiedergegeben. Als Brenngas wurde eine Mischung aus Wasserstoff und Propan verwendet, dem über konzentrisch angeordnete separate Düsen Octamethylcyclotetrasiloxan (OMCTS) als Silizium enthaltende Ausgangsverbindung mit Stickstoff als Trägergas sowie Sauerstoff als Oxidationsmittel beigemischt wurde.

Nach Abschluss des Abscheideprozesses wurde der Träger entfernt, wobei der SiO₂-Sootkörper eine durchschnittliche Wandstärke von 175 mm aufwies. Der SiO₂-Sootkörper wurde in vertikaler Ausrichtung in einen Dehydrationsofen eingebracht und nach einem Vorheizen bei 900 °C unter konstantem Stickstoffstrom bei dieser Temperatur Gegenwart eines chlorhaltigen Gases getrocknet, wobei als chlorhaltiges Gas eine Mischung aus Stickstoff und Chlorgas verwendet wurde. In einem abschließenden Schritt wurde der SiO₂-Sootkörper bei ca. 1550 °C unter vermindertem Druck (ca. 10⁻² mbar) in einem Sinterofen zu einem Quarzglasrohling verglast.

Anschließend wurde der OH-Gehalt der auf diese Weise erhaltenen Quarzglasrohlinge mit Hilfe von IR-Messungen nach der Methode von D. M. Dodd et al. ("Optical Determinations of OH in Fused Silica", 1966, S. 3911) bestimmt, wobei die Werte sowie die Trocknungszeit der SiO₂-Sootkörper ebenfalls in Tabelle 1 wiedergegeben sind.

Die Bestimmung der Konzentrationen von CO und NO₂ im Abgas erfolgte mit Hilfe von IR-Spektroskopie, wobei die Konzentrationen anhand der Bandenintensität relativ zu CO beziehungsweise NO/NO₂ als Kalibiergas ermittelt wurden.

Die mittlere Abscheiderate der SiO₂-Partikel auf dem Träger aus der Gewichtszunahme des Trägers in Abhängigkeit der Prozesszeit ermittelt.

Als Referenz wurde ein SiO₂-Sootkörper verwendet, der auf einem Al₂O₃-Träger mittels OVD-Verfahren abgeschieden wurde. Der verwendete Brenner bestand aus mehreren konzentrisch angeordneten Düsen, über die sowohl das Brenngas Wasserstoff, das Oxidationsmittel Sauerstoff (Knallgasflamme) als auch die siliziumhaltige Vorstufe SiCl₄ zusammen mit Sauerstoff als Trägergas zugeführt wurden. Nach Abschluss des Abscheideprozesses wurde der Träger entfernt, wobei der SiO₂-Sootkörper eine durchschnittliche Wandstärke von 175 mm aufwies. Der SiO₂-Sootkörper wurde in vertikaler Ausrichtung in einen Dehydrationsofen eingebracht und nach einem Vorheizen bei 900 °C unter konstantem Stickstoffstrom bei dieser Temperatur in Gegenwart eines chlorhaltigen Gases getrocknet, wobei als chlorhaltiges Gas eine Mischung aus Stickstoff und Chlorgas verwendet wurde. Die Behandlungsdauer betrug 24 Stunden.

In einem abschließenden Schritt wurde der SiO₂-Sootkörper bei ca. 1550 °C unter vermindertem Druck (ca. 10⁻² mbar) in einem Sinterofen zu einem Quarzglasrohling verglast.

**Tabelle 1**

| Eintrag | CO/SiO₂-Partikel¹ | NO₂/CO² | rel. Trocknungszeit [%] | OH-Gehalt [ppm]³ | Sootqualität im Aufbau⁴ |
|---|---|---|---|---|---|
| Beispiel 1 | 0,5 | 5 | 80 | 0,45 | + |
| Beispiel 2 | 1 | 20 | 76 | 0,41 | + |
| Beispiel 3 | 6 | 18 | 70 | 0,33 | ++ |
| Beispiel 4 | 6 | 0,4 | 72 | 0,3 | ++ |
| Beispiel 5 | 15 | 1 | 65 | 0,22 | ++ |
| Beispiel 6 | 25 | 15 | 63 | 0,15 | ++ |
| Vgl.-Beispiel 1 | 60 | 10 | 55 | 0,1 | - |
| Vgl.-Beispiel 2 | 80 | 25 | 50 | 0,05 | -- |
| Vgl.-Beispiel 3 | 0,1 | 0,2 | 95 | 0,65 | ○ |

| | | | | | |
|---|---|---|---|---|---|
| ¹ Verhältnis aus CO-Fracht im Abgas in g/h und SiO₂-Abscheiderate in kg/h ² Verhältnis aus NO2-Konzentration zu CO-Konzentration im Abgas, jeweils in mg/m³ ³ die ppm-Angabe bezieht sich jeweils auf Massenteile ⁴ Sootqualität: ++: sehr gut; +: gut; o: befriedigend; -: schlecht/ungenügend; --: unbrauchbar. | | | | | |

Wie Tabelle 1 zu entnehmen ist, lässt sich durch das erfindungsgemäße Verfahren die Trocknungszeit des SiO₂-Sootkörpers um bis zu 40% reduzieren im Vergleich zu einem SiO₂-Sootkörper, der gemäß einem Standardverfahren erhalten wurde (Beispiel 6). Ein besonders geringer Gehalt an OH-Gruppen im Quarzglasrohling konnte erreicht werden, wenn das Mengenverhältnis von CO im Abgas zu der Abscheiderate der SiO₂-Partikel bei etwa 25 und das Konzentrationsverhältnis von NO₂ zu CO im Abgas bei etwa 15 lag (Beispiel 6). Bei diesen Verhältnissen ließ sich der OH-Gehalt des Quarzglasrohlings auf 0,15 ppm absenken, obwohl die Trocknungszeit nur 63% der üblichen Trocknungszeit betrug.

Weiterhin zeigt die Tabelle, dass ein bestimmtes Mengenverhältnis von CO und der Abscheiderate der SiO₂-Partikel nicht überschritten werden sollte. Es ließ sich kein stabiler SiO₂-Sootkörper gewinnen, wenn das Mengenverhältnis größer als 60 war (Vgl.-Beispiel 1 und 2). Aufgrund der auftretenden Rissbildung konnte bei diesen Versuchen kein stabiler SiO₂-Sootkörper hergestellt werden. Bei einem Verhältnis unterhalb des erfindungsgemäßen Bereichs ließ sich keine Verbesserung des Trocknungsverhaltens des SiO₂-Sootkörpers beobachten (Vgl.-Beispiel 3).

Wie der Tabelle 1 zu entnehmen ist, lässt sich durch ein bestimmtes Verhältnis der Konzentrationen von NO₂ und CO im Abgas zusätzlich zu dem angegebenen Mengenverhältnis von CO im Abgas und der Abscheiderate der SiO₂-Partikel das Trocknungsverhalten des SiO₂-Körpers weiter optimieren. Weiterhin ist der Tabelle zu entnehmen, dass diese Verbesserung besonders dann auftritt, wenn das Verhältnis der Konzentrationen von NO₂ und CO im Abgas größer als 0,2 ist.

Wie der Tabelle 1 weiterhin zu entnehmen ist, weisen die nach dem erfindungsgemäßen Verfahren hergestellten SiO₂-Sootkörper neben einem verbesserten Trocknungsverhalten auch eine sehr gute Sootqualität auf.

## Patentansprüche

1. Verfahren zur Herstellung eines SiO₂-Sootkörpers in Gegenwart von Kohlenstoffmonoxid umfassend die folgenden Schritte:
a) Bereitstellen einer Reaktionskammer, die einen oder mehrere Abscheidebrenner und wenigstens einen Abgasauslass umfasst,
b) Zuführen eines Brenngases und einer gasförmigen, Silizium enthaltenden Ausgangsverbindung in die Reaktionskammer,
c) Umsetzen des Brenngases und der gasförmigen, Silizium enthaltenen Ausgangsverbindung mittels Abscheidebrenner zu SiO₂-Partikeln,
d) Abscheiden der SiO₂-Partikel auf einem Träger unter Bildung eines SiO₂-Sootkörpers und
e) Trocknen des SiO₂-Sootkörpers,
wobei das Verhältnis aus Kohlenstoffmonoxid (in g/h) im Abgas und der Aufbaurate an abgeschiedenen SiO₂-Partikeln (in kg/h) im Durchschnitt in einem Bereich von 0,2 bis 50, vorzugsweise in einem Bereich von 0,4 bis 25, insbesondere in einem Bereich von 0,5 bis 15 liegt.

2. Verfahren gemäß Anspruch 1, **dadurch gekennzeichnet, dass** das Abscheiden der SiO₂-Partikel axial oder radial auf dem Träger erfolgt.

3. Verfahren gemäß einem oder mehrerer der Ansprüche 1 oder 2, **dadurch gekennzeichnet, dass** die Umsetzung des Brenngases und der gasförmigen, Silizium enthaltenden Ausgangsverbindung zu SiO₂-Partikeln mittels Flammenhydrolyse und/oder Verbrennung der Silizium enthaltenden Ausgangsverbindung zu SiO₂-Partikeln erfolgt.

4. Verfahren gemäß einem oder mehrerer der Ansprüche 1 bis 3, **dadurch gekennzeichnet, dass** das Trocknen des SiO₂-Sootkörpers in einer chlorhaltigen Atmosphäre erfolgt.

5. Verfahren gemäß einem oder mehrerer der Ansprüche 1 bis 4, **dadurch gekennzeichnet, dass** das Brenngas Kohlenwasserstoffe, insbesondere solche ausgewählt aus der Gruppe bestehend aus Methan, Ethan, Propan und Butan umfasst.

6. Verfahren gemäß einem oder mehrerer der Ansprüche 1 bis 5, **dadurch gekennzeichnet, dass** die Silizium enthaltende Ausgangsverbindung ausgewählt ist aus der Gruppe bestehend aus Trimethoxymethylsilan, Octamethylcyclotetrasiloxan, Hexamethyldisiloxan, Hexamethylcyclotrisiloxan und Decamethylcyclopentasiloxan.

7. Verfahren gemäß einem oder mehrerer der Ansprüche 1 bis 6, **dadurch gekennzeichnet, dass** der Anteil der über den/die Abscheidebrenner zugeführten Verbrennungsenergie im Abscheideprozess, der von der Silizium enthaltenden Ausgangsverbindung eingetragen wird, mindestens 40%, vorzugsweise mindestens 55%, besonders bevorzugt mindestens 75% beträgt.

8. Verfahren gemäß einem oder mehrerer der Ansprüche 1 bis 7, **dadurch gekennzeichnet, dass** die Kohlenstoffmonoxidkonzentration im Abgas zwischen 1 und 300 mg/m³ liegt.

9. Verfahren gemäß einem oder mehrerer der Ansprüche 1 bis 8, **dadurch gekennzeichnet, dass** das Brenngas zusätzlich ein stickstoffhaltiges Gas umfasst.

10. Verfahren gemäß einem oder mehrerer der Ansprüche 1 bis 9, **dadurch gekennzeichnet, dass** das Verhältnis der Konzentrationen von NO₂ (in mg/m³) und CO (in mg/m³) im Abgas in einem Bereich von 0,2 bis 30, vorzugsweise von 2 bis 20, liegt.

11. Verfahren gemäß einem oder mehrerer der Ansprüche 1 bis 10, **dadurch gekennzeichnet, dass** der SiO₂-Sootkörper vor dem Trocknen eine relative Dichte von 22 bis 32% aufweist, bezogen auf die Dichte von Quarzglas.

12. Verfahren gemäß einem oder mehrerer der Ansprüche 1 bis 11, **dadurch gekennzeichnet, dass** der SiO₂-Sootkörper nach dem Trocknen eine mittlere spezifische Oberfläche von 5 bis 20 m²/g aufweist, bestimmt gemäß DIN ISO 9277:2003-5.

13. Verfahren gemäß einem oder mehrerer der Ansprüche 1 bis 12, **dadurch gekennzeichnet, dass** der SiO₂-Sootkörper in einen auf den Trocknungsschritt e) folgenden Schritt verglast wird.

14. SiO₂-Sootkörper, erhältlich gemäß einem Verfahren gemäß einem oder mehrerer der Ansprüche 1 bis 13.

15. Verglaster SiO₂-Sootkörper, erhältlich gemäß einem Verfahren gemäß Anspruch 14.

16. Verwendung eines verglasten SiO₂-Sootkörpers gemäß Anspruch 15 zur Herstellung von optischen Bauteilen, insbesondere für die Fiberoptik.
